(19) **Europäisches Patentamt / European Patent Office / Office européen des brevets**

(11) **EP 3 200 384 B1**

(12) **FASCICULE DE BREVET EUROPEEN**

(45) Date de publication et mention de la délivrance du brevet:
**09.05.2018 Bulletin 2018/19**

(51) Int Cl.:
*H04L 9/00* (2006.01)    *G06F 21/72* (2013.01)
*H04L 9/06* (2006.01)

(21) Numéro de dépôt: **17153545.3**

(22) Date de dépôt: **27.01.2017**

(54) **PROCÉDÉ D'EXECUTION DE CALCUL CRYPTOGRAPHIQUE ET APPLICATION A LA CLASSIFICATION PAR MACHINES A VECTEURS DE SUPPORT**

**VERFAHREN ZUR AUSFÜHRUNG EINER KRYPTOGRAPHISCHEN BERECHNUNG UND ANWENDUNG AUF DIE KLASSIFIZIERUNG DURCH SUPPORT-VECTOR-MASCHINEN**

**METHOD OF EXECUTION OF A CRYPTOGRAPHIC CALCULATION AND APPLICATION TO CLASSIFICATION BY SUPPORT VECTOR MACHINES**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.01.2016 FR 1650693**

(43) Date de publication de la demande:
**02.08.2017 Bulletin 2017/31**

(73) Titulaire: **Idemia Identity & Security France 92130 Issy-les-Moulineaux (FR)**

(72) Inventeurs:
• **MOREL, Constance**
  **92130 ISSY LES MOULINEAUX (FR)**
• **BRINGER, Julien**
  **92130 ISSY LES MOULINEAUX (FR)**
• **CHABANNE, Hervé**
  **92130 ISSY LES MOULINEAUX (FR)**

(74) Mandataire: **Regimbeau**
  **20, rue de Chazelles**
  **75847 Paris Cedex 17 (FR)**

(56) Documents cités:
• **Manas A. Pathak: "Privacy Preserving Techniques for Speech Processing", , 1 décembre 2010 (2010-12-01), pages 1-54, XP055030120, Extrait de l'Internet: URL:http://www.cs.cmu.edu/~manasp/proposal.pdf [extrait le 2012-06-16]**
• **SVEN LAUR ET AL: "Cryptographically private support vector machines", PROCEEDINGS OF THE TWELFTH ACM SIGKDD INTERNATIONAL CONFERENCE ON KNOWLEDGE DISCOVERY AND DATA MINING : AUGUST 20 - 23, 2006, PHILADELPHIA, PA, USA, NEW YORK, NY : ACM PRESS, 2 PENN PLAZA, SUITE 701 NEW YORK NY 10121-0701 USA, 20 août 2006 (2006-08-20), pages 618-624, XP058107743, DOI: 10.1145/1150402.1150477 ISBN: 978-1-59593-339-3**
• **KENG-PEI LIN ET AL: "On the Design and Analysis of the Privacy-Preserving SVM Classifier", IEEE TRANSACTIONS ON KNOWLEDGE AND DATA ENGINEERING, IEEE SERVICE CENTER, LOS ALAMITOS, CA, US, vol. 23, no. 11, 1 novembre 2011 (2011-11-01), pages 1704-1717, XP011353560, ISSN: 1041-4347, DOI: 10.1109/TKDE.2010.193**

**Description**

DOMAINE DE L'INVENTION

L'invention concerne un procédé d'exécution d'un calcul cryptographique mis en oeuvre conjointement entre deux unités de traitement, dans lequel une fonction de deux variables est évaluée par les deux parties, en ayant pour entrées des données détenues respectivement par chaque partie, sans qu'une partie n'apprenne d'informations sur la donnée détenue par l'autre partie.

L'invention s'applique notamment à la classification sécurisée selon un classificateur d'une machine à vecteur de support dont le classificateur utilise un noyau du type fonction de base radiale.

ETAT DE LA TECHNIQUE

On connaît déjà une technique de classification de données selon un classificateur d'une machine à vecteur de support (ou SVM pour Support Vector Machine en anglais). Cette technique consiste à classer une donnée d'entrée x en évaluant une fonction appelée classificateur H en la donnée x, et en comparant le résultat de H(x) à un seuil.

Par exemple, dans le cas d'un classement dans deux classes notées 1 et -1, on compare H(x) à un seuil b et, si H(x) est inférieur à b, x est déterminé comme appartenant à la classe 1 et si H(x) est supérieur à b, x est déterminé comme appartenant à la classe -1.

On peut ramener le seuil b à 0 en remplaçant H(x) par un H' tel que H'(x)=*signe*(H(x)-b).

La définition du classificateur dépend bien entendu de la définition des classes. Pour simplifier son calcul, le classificateur peut s'écrire avec une fonction noyau prédéfinie.

Un premier exemple de fonction noyau une fonction à base radiale (ou RBF pour Radial Basis Function en anglais), qui est une fonction à valeurs réelles dont la valeur dépend seulement de la distance de la donnée x à une donnée Y qui est un paramètre du classificateur.

Par exemple, une fonction noyau à base radiale peut être un noyau gaussien de la forme $\alpha e^{-\gamma \|x-Y\|_2^2}$. Le classificateur H(x) s'écrit alors :

$$\sum_{k=1}^{M} h_k(x) = \sum_{k=1}^{M} \alpha_k e^{-\gamma_k \|x-Y_k\|_2^2}$$

Un autre exemple de fonction noyau est un noyau tangente hyperbolique de la forme tanh $(\kappa \langle x|Y \rangle + C) = \frac{\exp(2(\kappa \langle x|Y \rangle + C)) - 1}{\exp(2(\kappa \langle x|Y \rangle + C)) + 1}$. Le classificateur H(x) s'écrit alors :

$$\sum_{k=1}^{M} h_k(x) = \sum_{k=1}^{M} \tanh(\kappa_k \langle x|Y_k \rangle + C_k)$$

Dans certains contextes il peut être avantageux de mettre en oeuvre une classification de données de façon sécurisée, c'est-à-dire de telle sorte que la partie qui détient la donnée à classifier n'apprenne aucune information sur les paramètres du classificateur, et que la partie qui connaît les paramètres du classificateur n'apprenne aucune information sur la donnée à classifier.

Cela peut être le cas pour protéger la confidentialité des données à classifier, par exemple.

Des méthodes de classification sécurisée de données suivant un classificateur SVM avec une fonction noyau ont déjà été proposées. Ces méthodes reposent sur l'implémentation de procédés de calcul sécurisé multipartite, c'est-à-dire des procédés où plusieurs parties interviennent dans le calcul, et à l'issue du procédé, une partie détient le résultat de la classification, et aucune partie n'a obtenu d'information sur les données détenues par les autres parties.

La difficulté principale qui se pose alors, pour certains noyaux comme le noyau gaussien à base radiale ou le noyau tangente hyperbolique, est le calcul sécurisé d'une exponentielle, figurant dans les exemples de fonctions noyaux présentés ci-avant. En effet, le calcul d'une exponentiation est une opération complexe à mettre en oeuvre dans des protocoles de calcul sécurisé multipartite.

Pour y remédier, on connaît par exemple de l'article de Lin et al., « On the design and analysis of the privacy-preserving SVM classifier », IEEE Trans. Knowl. Data Eng., 23(11) : 1704-1717, 2011, un procédé dans lequel une exponentielle est calculée au moyen d'un développement limité.

Une autre solution, présentée notamment dans les articles suivants :

- S. Avidan et al., « Privacy preserving pattern classification », In Proceedings of the International Conference on Image Processing, ICIP 2008, October 12-15, 2008, San Diego, California, USA, pages 1684-1687, 2008,
- M. Upmanyu et al, "a secure crypto-biometric verification protocol", IEEE Transactions on Information Forensics and Security, 5(2) : 255-268, 2010,
- Y. Rahulamathavan et al., "Privacy-preserving clinical decision support system using gaussian kernel-based classification", IEEE J. Biomedical and Health Informatics, 18(1) : 56-66, 2014

propose, pour obtenir le résultat d'une fonction $e^{f(x,y)}$, de calculer par calcul sécurisé multipartite f(x,y)+r avec r un élément aléatoire choisi par une partie, et f(x,y)+r étant le résultat obtenu par l'autre partie, de sorte qu'aucune partie ne détiennent le résultat f(x,y). Puis la partie ayant obtenu f(x,y)+r calcule $e^{f(x,y)+r}$ et l'autre partie calcule $e^r$, et les parties partagent le résultat pour que l'une obtienne $e^{f(x,y)+r}/e^r$.

Ce procédé présente l'inconvénient de ne pas être complètement sécurisé car il n'est pas possible de choisir r aléatoirement uniformément réparti dans un espace infini et il est possible de déduire de l'information sur la valeur de f(x,y). Par exemple, en notant $T = [T_{min}, T_{max}]$ l'espace dans lequel r est choisi, alors si $f(x,y) + r > T_{max}$, on peut en déduire que f(x,y) est supérieur à f(x,y)+r-$T_{max}$.

Une solution pour sécuriser ce procédé pourrait être de calculer f(x,y)+r modulo T, c'est-à-dire $((f(x,y) + r)\bmod T) = f(x,y) + r + k \times (T_{max} - T_{min})$ avec $k \in \mathbb{Z}$ tel que $T_{min} \leq f(x,y) + r + k \times (T_{max} - T_{min}) \leq T_{max}$. Dans ce cas, $((f(x,y) + r)\bmod T)$ serait aléatoirement uniformément réparti dans l'espace T et par conséquent aucune information sur f(x,y) ne pourrait être déduite. Cependant, le procédé devient inexact et ne renvoie pas toujours le bon résultat car $e^{f(x,y)}$ n'est pas toujours égal à $e^{f(x,y)+r)\bmod T}/e^r$.

Manas A. Pathak, "Privacy Preserving Techniques for Speech Processing", expose un classificateur agrégat différentiellement privé basé sur une permutation non-publique sur un vecteur d'index.

Sven Laur et al., "Cryptographically Private Support Vector Machines" expose un système de classification privée basé sur le transfert inconscient.

PRESENTATION DE L'INVENTION

Un objectif de l'invention est de proposer un procédé permettant de classifier une donnée de façon sécurisée avec une machine à vecteur de support dont l'évaluation du noyau peut comprendre une exponentiation.

A cet égard, l'invention a pour objet un procédé d'exécution d'un calcul cryptographique mis en oeuvre par une première unité de traitement dite unité-client possédant une première donnée comprenant un nombre n de composantes indexées et une deuxième unité de traitement dite unité-serveur possédant au moins une deuxième donnée, les unités comprenant chacune des moyens de traitement, le procédé comprenant l'évaluation sécurisée d'une fonction de deux variables s'écrivant comme un produit de :

- une sous-fonction $f_X$ d'une première variable
- une sous-fonction $f_Y$ d'une deuxième variable, et
- un produit de n sous-fonctions indexées $f_i$ des deux variables,

l'évaluation étant mise en oeuvre avec la première et la deuxième donnée comme entrées de la fonction, le procédé étant caractérisé en ce qu'il comprend les étapes suivantes :

- génération aléatoire, par l'unité-serveur, d'un ensemble de n données inversibles pour la multiplication indexées $r_i$ appartenant à l'ensemble $\mathbb{Z}_m$ avec m premier,
- génération, par l'unité-serveur, pour chaque i de 1 à n, d'un ensemble dont chaque élément est formé par le produit d'une donnée indexée $r_i$ avec un résultat possible de la sous-fonction de deux variables $f_i$ évaluée en la première et la deuxième donnée,
- mise en oeuvre d'un protocole de transfert inconscient entre l'unité client et l'unité serveur pour que l'unité client récupère, pour chaque i de 1 à n, une donnée intermédiaire $t_i$ égale au résultat de la sous-fonction de deux variables $f_i$ évaluée en la première et la deuxième données, multipliée par la donnée indexée $r_i$ :

$$t_i = r_i \times f_i(x_i, Y)$$

- multiplication, par l'unité client, de toutes les données intermédiaires et de la sous-fonction de la première variable $f_X$ évaluée en la première donnée pour obtenir un résultat T :

$$T = f_X(X') \times \prod_{i=1}^{n} t_i$$

- génération, par l'unité serveur, d'un résultat R égal au produit de tous les inverses des données indexées et de la sous-fonction de la deuxième variable $f_Y$ évaluée en la deuxième donnée:

$$R = f_Y(Y) \times \prod_{i=1}^{n} r_i^{-1}$$

- utilisation des résultats T et R dans une application cryptographique.

Avantageusement, mais facultativement, le procédé selon l'invention peut en outre comprendre l'une des caractéristiques suivantes :

- le procédé peut en outre comprendre une étape au cours de laquelle l'unité-client communique le résultat T à l'unité serveur, et l'unité-serveur calcule le résultat de la fonction en multipliant le résultat T par le résultat R.
- le procédé peut en outre comprendre une étape au cours de laquelle l'unité-serveur communique le résultat R à l'unité client, et l'unité-client calcule le résultat de la fonction en multipliant le résultat T par le résultat R.
- l'unité-serveur peut posséder un nombre N de données $Y_1, \ldots Y_N$, et la donnée détenue par l'unité-client est exprimée en base q, où q est un nombre entier positif strictement supérieur à 1, les composantes de la données étant à valeurs entre 0 et q-1, et le procédé comprend alors l'évaluation de la fonction entre la donnée de l'unité client et respectivement chaque donnée de l'unité-serveur, et

  ○ lors de l'étape a), l'unité serveur génère aléatoirement un nombre N.n de données inversibles indexées $r_{i,j}$,
  ○ lors de l'étape b), l'unité-serveur génère :

  ■ soit, pour chaque donnée $Y_j$ qu'elle possède, et pour chaque i de 1 à n, un q-uplet dont chaque élément est formé par le produit d'une donnée indexée $r_{i,j}$ avec un résultat possible de la sous-fonction de deux variables $f_i$ évaluée en la première et la deuxième donnée :

  $$(r_{i,j} \times f_i(0, Y_j), \ldots, r_{i,j} \times f_i(q-1, Y_j))$$

  ■ soit, pour chaque i de 1 à n, un q-uplet dont chaque élément est la concaténation des résultats du produit d'une donnée indexée avec l'évaluation de la sous-fonction de deux variables $f_i$ en un élément entier compris entre 0 et q-1 et chacune des N données de l'unité serveur:

  $$(r_{i,1} \times f_i(0, Y_1) || \ldots || r_{i,N} \times f_i(0, Y_N), \ldots, r_{i,1} \times f_i(q-1, Y_1) || \ldots || r_{i,N} \times$$
  $$f_i(q-1, Y_N)).,$$

  ○ lors de l'étape c), l'unité client met en oeuvre respectivement :

  ■ soit un nombre N.n de transferts inconscients de type 1 parmi q avec les entrées de l'unité serveur codées sur m bits,
  ■ soit un nombre n de transferts inconscients de type 1 parmi q avec les entrées de l'unité serveur codées sur N.m bits.

- les données de l'unité client et de l'unité serveur peuvent être des données représentatives d'objets physiques ou de grandeurs physiques obtenues à partir d'un capteur ou d'une interface.
- la fonction peut être au moins une partie d'un noyau d'une machine à vecteur de support.

L'invention a également pour objet un produit programme d'ordinateur, comprenant des instructions de code pour l'exécution, par un processeur d'une unité de traitement, d'un procédé comprenant la mise en oeuvre d'étapes de :

- génération aléatoire d'un ensemble de n données inversibles pour la multiplication indexées $r_i$ appartenant à l'ensemble $\mathbb{Z}_m$ avec m premier,
- génération, pour chaque i de 1 à n, d'un ensemble dont chaque élément est formé par le produit d'une donnée indexée $r_i$ avec un résultat possible d'une fonction de deux variables $f_i$ évaluée en une donnée inconnue et une donnée connue,
- participation à un protocole de transfert inconscient avec une unité de traitement distincte pour communiquer, pour chaque i de 1 à n, un élément parmi les éléments générés.

L'invention a également pour objet un procédé de classification d'une donnée détenue par une unité-client par l'évaluation d'un classificateur H d'une machine à vecteur de support en ladite donnée mise en oeuvre conjointement entre l'unité client et une unité serveur détenant des paramètres du classificateur H, , caractérisé en ce qu'il comprend :

- l'évaluation d'au moins une partie du noyau du classificateur en la donnée détenue par l'unité-client mise en oeuvre conformément au procédé selon l'une des revendications qui précèdent, et
- l'évaluation du classificateur en la donnée détenue par l'unité-client à partir de l'évaluation, par calcul sécurisé multipartite entre l'unité client et l'unité serveur.

Avantageusement, mais facultativement, le procédé de classification selon l'invention peut en outre comprendre au moins l'une des caractéristiques suivantes :

- le procédé peut comprendre une étape préliminaire de quantification de la donnée détenue par l'unité-client, et l'étape d'évaluation d'au moins une partie du noyau du classificateur peut être mise en oeuvre sur une quantification entière du noyau du classificateur.
- l'étape d'évaluation du noyau du classificateur peut être mise en oeuvre sur une quantification entière du noyau du classificateur multiplié par un facteur d'échelle.
- le noyau du classificateur peut être un noyau à base radiale gaussien h de la forme :

$$h(X, Y) = \alpha e^{-\gamma \|X - Y\|_2^2}$$

et la donnée (X) détenue par l'unité-client comprend K composantes flottantes $(X_1, ... X_K)$, et le procédé comprend alors les étapes de :

◦ génération (100), à partir de la donnée (X) détenue par l'unité-client, d'une donnée $(X' = (x_1, ... x_{n+p}))$ en base q, et dont :

▪ les n premières composantes correspondent à la quantification des K composantes de la donnée (X), et vérifient :

$$X_i \approx \sum_{j=1}^{\ell} q^{j-1} x_{(i-1)\ell+j}$$

où $n = K * \ell$, $X_i$ est une composante de la donnée (X) et $x_i$ est une composante de la donnée binaire (X'),
▪ les n+1ème à n+pème composantes correspondant à la quantification de la norme quadratique de la donnée (X), $\|X\|_2^2$, telles que :

$$\|X\|_2^2 \approx \sum_{i=1}^{p} q^{i-1} x_{n+i}$$

∘ évaluation (200) du noyau de classificateur, par le calcul d'une fonction F s'écrivant comme le produit de :

▪ une sous-fonction $f_X$ de la donnée X' de l'unité client telle que $f_X(X)=1$

▪ une sous-fonction $f_Y$ d'une deuxième donnée Y détenue par l'unité serveur telle que $f_Y(Y) = \alpha e^{-\gamma \|Y\|_2^2}$

▪ un produit de n sous-fonctions $f_i$ indexées de deux variables, telles que :

$$\forall (i,j) \in [1, K] \times [1, \ell], f_{(i-1)\ell+j}\big(x_{(i-1)\ell+j}, Y\big) = quant\left(ae^{\gamma 2^j x_{(i-1)\ell+j}Y_i}\right)$$

$$\forall i \in [1, p], f_{K\ell+i}(x_{K\ell+i}, Y) = quant\left(ae^{\gamma 2^{i-1} x_{K\ell+i}}\right)$$

où *quant* est une fonction de quantification entière et a est un facteur d'échelle supérieur ou égal à 1.

- le noyau du classificateur peut être un noyau tangente hyperbolique h de la forme :

$$h(X, Y) = \tanh(\kappa \langle X|Y \rangle + C)$$

et la donnée détenue par l'unité-client comprend K composantes flottantes $(X_1,...X_K)$, le procédé comprend alors les étapes de :

∘ génération (100), à partir de la donnée (X) détenue par l'unité-client, d'une donnée (X') en base q, dont les composantes correspondent à la quantification des K composantes de la donnée (X), et vérifient :

$$X_i \approx \sum_{j=1}^{\ell} q^{j-1} x_{(i-1)\ell+j}$$

où n=K*ℓ, $X_i$ est une composante de la donnée (X) et $X_i$ est une composante de la donnée en base q (X'),

∘ évaluation (200) d'une partie du noyau de classificateur de la forme $\exp(2(\kappa < X|Y > +C))$, par le calcul d'une fonction F s'écrivant comme le produit de :

▪ une sous-fonction $f_X$ de la donnée (X') en base q de l'unité client telle que $fx(X')=1$
▪ une sous-fonction $f_Y$ d'une deuxième donnée (Y) détenue par l'unité serveur telle que $f_Y(Y) = e^{2C}$
▪ un produit de n sous-fonctions $f_i$ indexées de deux variables, telles que :

$$\forall (i,j) \in [1, K] \times [1, \ell], f_{(i-1)\ell+j}\big(x_{(i-1)\ell+j}, Y\big) = quant\left(a. e^{\kappa 2^j x_{(i-1)\ell+j}Y_i}\right)$$

où *quant* est une fonction de quantification entière et a est un facteur d'échelle supérieur ou égal à 1.

L'invention a aussi pour objet un système de traitement de données comprenant une première unité de traitement et une deuxième unité de traitement, chaque unité de traitement comprenant un processeur et une interface de communication, le système étant caractérisé en ce que la première et la deuxième unité de traitement sont adaptées pour mettre en oeuvre le procédé d'exécution de calcul cryptographique ou le procédé de classification selon la description qui précède.

Le procédé proposé permet de calculer de façon sécurisée entre deux parties une fonction s'écrivant comme un produit de sous-fonctions de deux variables et de deux fonctions d'une variable (éventuellement constantes).

Parmi les fonctions pouvant être évaluées grâce à ce procédé, figurent des fonctions noyaux de machines à vecteur de support telles qu'un noyau gaussien ou un noyau tangente hyperbolique, qui s'écrivent comme un produit d'exponentielles.

Le procédé permet d'évaluer simplement une telle fonction en la décomposant en composantes exponentielles élémentaires ne dépendant que d'un seul bit de la donnée à classifier.

De plus ce procédé ne laisse fuir aucune information sur l'argument de l'exponentielle et est donc sécurisé.

DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

- La figure 1 représente schématiquement un exemple de système de traitement de données.
- La figure 2a représente schématiquement les principales étapes d'un exemple de procédé d'exécution d'un calcul cryptographique comprenant une évaluation sécurisée d'une fonction.
- La figure 2b représente schématiquement les principales étapes d'un exemple de procédé de classification.
- La figure 3 représente schématiquement un exemple de mise en oeuvre d'une phase d'évaluation sécurisée d'une fonction.

DESCRIPTION DETAILLEE D'AU MOINS UN MODE DE MISE EN OEUVRE DE L'INVENTION

*Système de traitement de données*

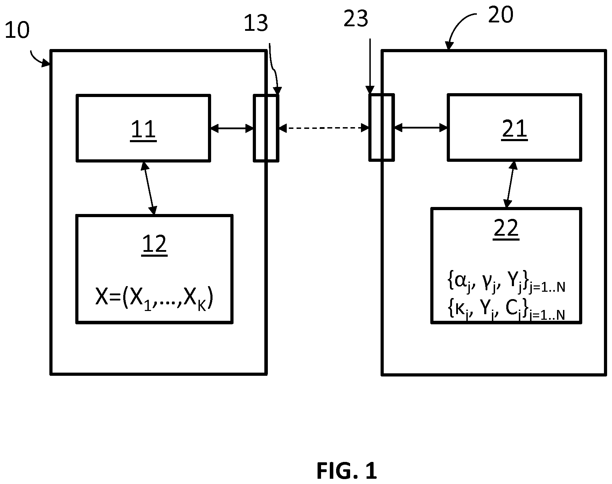

En référence à la figure 1, on a représenté deux unités de traitement 10, 20 comprenant respectivement une unité-client 10 et une unité-serveur 20. Chaque unité de traitement comprend des moyens de traitement, par exemple un processeur 11, 21 adapté pour mettre en oeuvre des calculs ou des opérations sur des données, et pour exécuter un programme comprenant des instructions de code installées sur le processeur. Chaque unité de traitement comprend également une mémoire 12, 22, et une interface de communication 13, 23 avec l'autre partie.

L'unité-client 10 détient une donnée X comprenant un nombre K de composantes $X_i$, où K est un nombre entier positif et i est un indice muet à valeurs de 1 à K, $X=(X_1,...,X_K)$. La donnée X est avantageusement une donnée à classifier. La donnée X peut être représentative d'un objet ou d'une grandeur physique. Elle peut avoir été obtenue à partir d'un capteur ou d'une interface. A titre d'exemple non limitatif, la donnée X peut être une acquisition numérique d'un trait biométrique d'un individu. La classification de la donnée consiste à vérifier si la donnée correspond à une acquisition réalisée sur un tissu vivant ou non, auquel cas une fraude peut être détectée.

La classification de la donnée X est alors mise en oeuvre au moyen d'une machine à vecteur de support comprenant un classificateur H utilisant une fonction noyau, pouvant comprendre une exponentielle.

L'unité-serveur 20 détient dans ce cas les paramètres du classificateur H. Par exemple, dans le cas où le noyau h du classificateur est un noyau à base radiale gaussien de la forme $h(x) = \alpha e^{-\gamma \|x - Y\|_2^2}$, le classificateur s'écrit :

$$H(X) = \sum_{j=1}^{N} h_j(X) = \sum_{j=1}^{N} \alpha_j e^{-\gamma_j \|X - Y_j\|_2^2}$$

Où N est un nombre premier positif, j est un indice muet à valeurs de 1 à N, et $\alpha_j$, $\gamma_j$, et $Y_j$ sont les paramètres du classificateur.

L'unité-serveur 20 détient les paramètres $\alpha_j$, $\gamma_j$, et $Y_j$, pour j de 1 à N.

Selon un autre exemple, le noyau h du classificateur peut être un noyau tangente hyperbolique de la forme $h(x) = \tanh(\kappa\langle x|Y\rangle + C)$, le classificateur s'écrit :

$$H(X) = \sum_{j=1}^{N} h_j(X) = \sum_{j=1}^{N} \tanh(\kappa_j\langle X|Y_j\rangle + C_j)$$

Où $\kappa_j$, $Y_j$ et $C_j$ sont les paramètres du classificateur.

L'unité serveur 20 détient alors les paramètres $\kappa_j$, $Y_j$ et $C_j$, pour tout j de 1 à N.

D'autres noyaux de classificateur existent, par exemple un noyau polynomial homogène ou inhomogène.

*Procédé de classification de données*

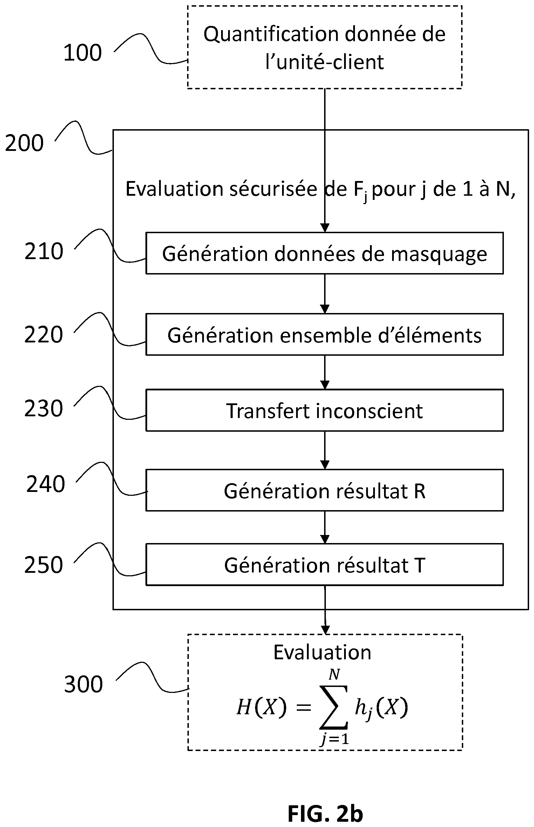

En référence à la figure 2b, les unités de traitement 10, 20 peuvent s'engager dans un procédé de classification de la donnée X détenue par l'unité client 10.

Dans le cas où les composantes de la donnée X détenue par l'unité-client sont des nombres flottants, c'est-à-dire des nombres à virgules, le procédé comporte avantageusement une première étape 100 consistant à ramener la donnée détenue par l'unité client 10 à une donnée exprimée en base q, c'est-à-dire dont toutes les composantes sont à valeurs entières comprises entre 0 et q-1, où q est un nombre entier strictement supérieur à 1.

Par exemple cette étape 100 peut être une étape de binarisation de la donnée détenue par l'unité client, dans le cas où q=2.

Cette étape comprend l'approximation de la donnée X par une donnée X' dont les composantes $X'_i$ sont des entiers, pour pouvoir ensuite mettre en oeuvre avec la donnée quantifiée un calcul sécurisé. En effet, les protocoles de calcul sécurisé multipartite (ou SMC pour Secure Multi-party computation en anglais) sont des protocoles qui s'appliquent à des entiers et non des flottants. A cet égard, il a été démontré (par exemple dans les articles cités précédemment) que la dégradation des performances due à la quantification est très faible.

La donnée X' est en outre réécrite en base q afin d'obtenir un vecteur dont les composantes $x_i$ sont à valeurs entières comprises entre 0 et q-1. On note:

$$X_i \approx X'_i = \sum_{j=1}^{\ell} \mathrm{q}^{j-1} x_{(i-1)\ell+j}$$

Où $(x_1,...,x_n)$ sont des composantes q-aires c'est-à-dire à valeur dans {0,...,q-1}, et où $n=K*\ell$, n est le nombre de composantes de la donnée réécrite en base q, $\ell$ un nombre entier positif, et j un indice muet à valeurs de 1 à $\ell$. La donnée de l'unité-client est donc approximée sous la forme $X' = (x_1,...,x_n) \in \{0,...,q-1\}^n$.

Dans un cas particulier la donnée X' est une donnée binaire dont les composantes sont à valeurs dans {0,1}.

Dans un mode de réalisation particulier dans lequel le noyau du classificateur est gaussien, comme on va le voir ci-après l'unité-client aura également besoin, pour évaluer le noyau en sa donnée X, d'évaluer la norme quadratique au carré de sa donnée $\|X\|_2^2$. Par conséquent, l'étape 100 de quantification comprend également une quantification de cette norme quadratique, suivie d'une conversion de la norme en une donnée exprimée en base q, par la génération de p composantes q-aire $x_i$ telles que :

$$\|X\|_2^2 \approx \sum_{i=1}^{p} q^{i-1} x_{n+i}$$

Où p est un nombre entier positif, et i un indice muet à valeurs de 1 à p.

Selon ce mode de réalisation, dans la suite du procédé, l'entrée du client sera alors une donnée $X' = (x_1,...,x_{n+p}) \in \{0,...,q-1\}^{n+p}$. Dans le cas où la donnée X est binarisée, sa norme quadratique est également binarisée.

*Evaluation sécurisée de fonction*

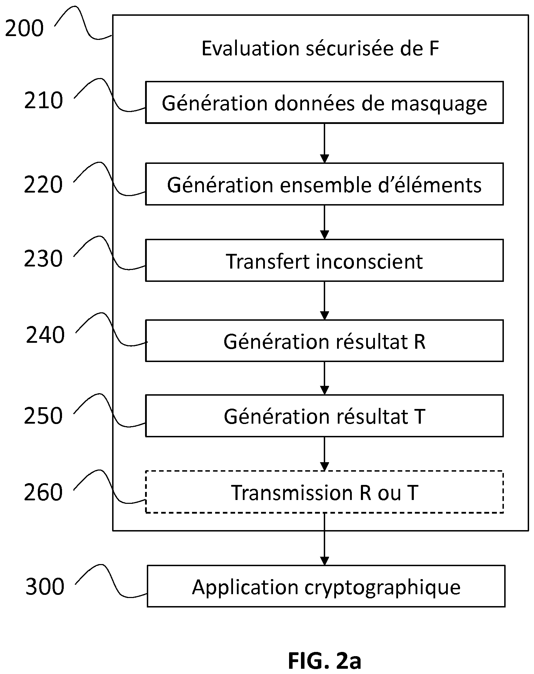

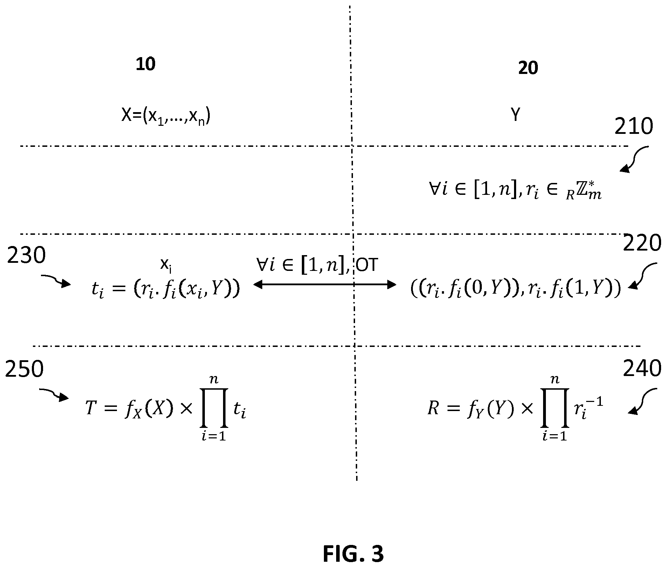

En référence aux figures 2a, 2b et 3, l'unité-client et l'unité-serveur peuvent ensuite s'engager dans un procédé 200 de calcul sécurisé multipartite d'une fonction F de deux variables X, Y, s'écrivant de manière générale comme le produit :

- D'une sous-fonction d'une première variable $f_X(X)$,
- D'une sous-fonction d'une deuxième variable $f_Y(Y)$, et
- D'un produit de n sous-fonctions des deux variables $f_i(x_i,Y)$, où n est le nombre de composantes $x_i$ de la donnée X de l'unité-client, c'est-à-dire un nombre entier positif, et i un indice muet à valeurs de 1 à n.

La donnée X de l'unité client est une donnée exprimée en base-q (le cas échéant via la mise en oeuvre de l'étape 100), dont les composantes sont à valeurs entières comprises entre 0 et q-1. Dans un cas particulier, la donnée X est binaire, c'est-à-dire dont les composantes sont à valeurs égales à 0 ou 1.

On note donc :

$$F(X,Y) = f_X(X) \times f_Y(Y) \times \prod_{i=1}^{n} f_i(x_i, Y)$$

Pour la mise en oeuvre de l'étape 200, tous les calculs sont effectués dans l'ensemble $\mathbb{Z}_m$ des entiers compris entre 0 et m-1, avec m un nombre entier positif premier. A cet égard, on adapte la valeur de m en fonction de la fonction F, de telle sorte que l'espace $\mathbb{Z}_m$ contienne tous les résultats possibles de la fonction F. Pour la sécurité du protocole, celui-ci est également restreint aux fonctions $f_i$ et aux entrées X,Y telles que $f_i(x_i,Y)$ ne soit jamais nul.

Dans le contexte d'un procédé de classification de données, la fonction F est la fonction noyau $h_j$ de la machine à vecteur de support ou une partie de celle-ci, éventuellement multipliée d'un facteur d'échelle a comme expliqué ci-après, et quantifiée. Les noyaux $h_j$ sont donc tous calculés pour j de 1 à N.

Le procédé exposé ci-dessous n'est néanmoins pas limité à des applications de classification et donc à des fonctions noyaux de machine à vecteur de support.

La figure 3 illustre un exemple de mise en oeuvre de l'étape 200 pour un cas général où l'unité-serveur détient une donnée Y, l'unité-client détient la donnée X, et les données s'engagent dans le calcul de F(X,Y).

Alternativement, l'unité-serveur peut détenir un ensemble de N données $(Y_1,...,Y_N)$, et le procédé peut avoir pour objectif de calculer l'évaluation de la fonction en la donnée de l'unité-client et chaque donnée de l'unité-serveur, c'est-à-dire tous les $F(X,Y_j)$ avec j compris entre 1 et N. Ceci est notamment le cas dans l'application à un classificateur de machine à vecteur de support de la forme :

$$H(X) = \sum_{j=1}^{N} h_j(X) = \sum_{j=1}^{N} F(X, Y_j)$$

Le procédé 200 comprend une première étape 210 au cours de laquelle l'unité-serveur génère aléatoirement un ensemble de données de masquage $r_i$ indexées inversibles pour la multiplication dans l'ensemble $\mathbb{Z}_m$. Le fait que m soit premier permet que tous les éléments non nuls de $\mathbb{Z}_m$ soient inversibles. Ainsi les $r_i$ sont choisis dans $\mathbb{Z}_m{}^*$.

Dans le cas où l'unité-serveur détient plusieurs données $Y_j$, il génère aléatoirement autant d'ensembles de données $r_{i,j}$ qu'il détient de données.

Le procédé 200 comprend ensuite une étape 220 au cours de laquelle l'unité-serveur génère, à partir de ces données $r_i$, et pour tout i de 1 à n, un ensemble d'éléments tel que chaque élément est un résultat possible de la fonction $f_i$ évaluée en la donnée de l'unité-client, qui lui est donc inconnue, et la donnée de l'unité-serveur, multipliée par une donnée $r_i$.

Ainsi lorsque l'unité serveur n'a qu'une seule donnée binaire, l'ensemble d'éléments généré pour chaque i est le doublet :

$$\left( r_i \times f_i(0, Y), r_i \times f_i(1, Y) \right).$$

Lorsque l'unité serveur n'a qu'une seule donnée q-aire, l'ensemble d'éléments est un q-uplet :

$$\left( r_i \times f_i(0, Y), ..., r_i \times f_i(q - 1, Y) \right).$$

Lorsque l'unité serveur a N données, deux cas sont possibles. Elle peut répéter l'étape 220 N fois, c'est-à-dire qu'elle génère, pour chaque donnée j de 1 à N, et pour chaque i de 1 à n, un q-uplet (qui peut être un doublet si q=2):

$$\left( r_{i,j} \times f_i(0, Y_j), ..., r_{i,j} \times f_i(q - 1, Y_j) \right).$$

Elle obtient donc n*N doublets.

Alternativement, l'unité serveur peut générer seulement n q-uplet, soit un q-uplet par composante de la donnée de l'unité client. Dans ce cas, chaque élément de chaque q-uplet est la concaténation des résultats du produit d'une donnée indexée $r_i$ avec l'évaluation de la sous-fonction de deux variables $f_i$ en un élément a parmi l'ensemble des entiers de 0 à q-1, et en chacune des N données $Y_j$ de l'unité serveur :

$$r_{i,1} \times f_i(a, Y_1) || \dots || r_{i,N} \times f_i(a, Y_N),$$

Chacun des n doublets s'écrit donc, pour i de 1 à n,

$$(r_{i,1} \times f_i(0, Y_1) || \dots || r_{i,N} \times f_i(0, Y_N), \dots, r_{i,1} \times f_i(q-1, Y_1) || \dots || r_{i,N} \times f_i(q-1, Y_N)).$$

Le procédé comprend ensuite une étape 230 lors de laquelle l'unité client et l'unité serveur s'engagent dans un protocole de transfert inconscient, et où le client récupère, pour chaque i de 1 à n, l'un des éléments générés par le serveur à l'étape 120 en fonction de la valeur de $x_i$. Ainsi dans le cas où l'unité serveur ne possède qu'une seule donnée, l'unité-client récupère pour tout i de 1 à n l'élément du q-uplet indexé par la valeur de $x_i$. Dans le cas binaire: si $x_i=0$, elle récupère le premier élément, et si $x_i=1$, elle récupère le deuxième.

De la sorte, l'unité client récupère une donnée intermédiaire $t_i$ telle que :

$$t_i = r_i \times f_i(x_i, Y).$$

Dans le cas où l'unité-serveur comprend plusieurs données $Y_J$, la mise en oeuvre du protocole de transfert inconscient dépend de la mise en oeuvre de l'étape 120 précédente.

Dans le premier des deux cas exposés ci-avant, l'unité client doit mettre en oeuvre un nombre n*N de transferts inconscients de type 1 parmi q avec des entrées de l'unité-serveur sur m bits pour récupérer des données intermédiaires pour tous les doublets. Dans le deuxième cas, elle ne réalise que n transferts inconscients de type 1 parmi q, avec des entrées de l'unité-serveur sur m.N bits.

Les transferts inconscients sont de type 1 parmi 2 dans le cas où la donnée de l'unité client est binaire.

Pour la mise en oeuvre d'un transfert inconscient de type 1 parmi q, on pourra se référer aux publications suivantes :

- M. Naor et B. Pinkas, « Computationally secure oblivious transfer ». J. Cryptology, 18(1)::1-35, 2005,
- V. Kolesnikov et R. Kumaresan, « Improved OT extension for transferring short secrets", in Advances in Cryptology - Crypto 2013 - 33rd Annual Cryptology Conférence, Santa Barbara, CA, USA, August 18-22, 2013, Proceedings, Part II, pages 54-70, 2013.

Dans les deux cas, le protocole de transfert inconscient utilisé est avantageusement du type présenté au protocole 52, section 5.3 de la publication de G. Asharov et al., « More efficient Oblivious Transfer and Extensions for Faster Secure Computation », In 2013 ACM SIGSAC Conference on Computer and Communications Security, CCS'13, Berlin, Germany, November 4-8, 2013, pages 535-548, 2013.

Ce protocole permet d'étendre $\kappa$ transferts inconscients sur des entrées de $\kappa$ bits (où $\kappa$ est un paramètre de sécurité souvent égal à 80 ou 128), en n transferts inconscients sur l bits, avec n>$\kappa$ et l>$\kappa$, en utilisant uniquement des opérations cryptographiques symétriques efficaces, comme des fonctions de hachage ou des fonctions pseudo-aléatoires (ou PRF pour pseudo-random function).

Ce protocole est néanmoins plus approprié au deuxième cas avec n transferts inconscients car le nombre de transferts à exécuter est moindre.

Dans tous les cas, à l'issue de l'étape 230, l'unité client dispose donc, pour chaque i de 1 à n et pour chaque donnée $Y_{(j)}$ de l'unité-serveur, d'une donnée intermédiaire égale à l'évaluation de la sous-fonction $f_i$ en sa donnée et la donnée de l'unité serveur, multipliée par la donnée $r_{i,(j)}$ correspondante, qui est une donnée de masquage du résultat intermédiaire $f_i(x_i, Y_{(j)})$.

Le procédé comprend également une étape 240 dans laquelle l'unité-serveur effectue, pour chaque donnée qu'elle détient, la multiplication de l'ensemble de tous les inverses $r_i^{-1}$ des données $r_i$ correspondant à la donnée Y, et multipliés par l'évaluation de la sous-fonction de la deuxième variable en sa donnée $f_Y(Y)$. Avantageusement ceci est réalisé d'abord en multipliant toutes les données $r_i$ puis de prendre l'inverse du résultat de ce produit et de le multiplier par l'évaluation de la sous-fonction $f_Y(Y)$, car ceci réduit le nombre d'opérations d'inversion. Si elle n'a qu'une seule donnée Y elle obtient un résultat R tel que :

$$R = f_Y(Y) \times \prod_{i=1}^{n} r_i^{-1}$$

Si elle a plusieurs données $Y_j$ alors elle obtient autant de $R_j$ s'écrivant respectivement :

$$R_j = f_{Y_j}(Y_j) \times \prod_{i=1}^{n} r_{i,j}^{-1}$$

Cette étape peut avoir lieu n'importe quand après l'étape 210, et pas nécessairement après l'étape 230.

Le procédé comprend ensuite une étape 250 où l'unité-client effectue la multiplication de toutes les données intermédiaires $t_i$, et les multiplie aussi par l'évaluation de la sous-fonction de la première variable en sa donnée $f_X(X)$. Elle obtient un résultat T tel que:

$$T = f_X(X) \times \prod_{i=1}^{n} t_i$$

Pour que l'une des parties obtienne le résultat final F(X,Y), elle obtient de l'autre partie son résultat, lors d'une étape facultative 260. Par exemple l'unité-client peut recevoir tous les résultats $R_{(j)}$ de l'unité-serveur, et calculer, pour chaque donnée $Y_{(j)}$, le produit de T et $R_{(j)}$ qui donne :

$$T \times R_{(j)} = f_X(X) \times f_{Y_j}(Y_j) \times \prod_{i=1}^{n} f_i\big(x_i, Y_{(j)}\big) = F(X, Y_{(j)})$$

En variante, l'unité-client peut communiquer à l'unité-serveur son résultat R. L'unité-serveur calcule alors, pour chaque donnée $Y_{(j)}$, le produit de T et $R_{(j)}$ qui donne le même résultat F(X,Y).

Le résultat F(X,Y) peut ensuite être utilisé par l'une des parties, avantageusement dans une application cryptographique 300 (par exemple signature, chiffrement, etc.).

De retour à l'application à la classification de données, l'étape 200 de calcul décrite ci-avant est mise en oeuvre avec pour fonction F le noyau du classificateur H ou une partie de celui-ci, dont chaque sous-fonction $f_i$ peut comprendre un terme exponentiel. Le classificateur H comprend donc une somme de fonctions $F_j$ qui doivent toutes être évaluées de façon sécurisée.

Dans l'exemple où le noyau du classificateur est un noyau gaussien le classificateur s'écrit :

$$H(X') = \sum_{j=1}^{N} h_j(X') = \sum_{j=1}^{N} F_j(X', Y_j) = \sum_{j=1}^{N} \alpha_j e^{-\gamma_j \|X' - Y_j\|_2^2}$$

et la fonction F est le noyau du classificateur. Il faut donc calculer un ensemble de fonctions $F_j = h_j$ s'écrivant :

$$F_j(X', Y_j) = \alpha_j e^{-\gamma_j \|X' - Y_j\|_2^2}$$

les paramètres détenus par l'unité serveur étant les $Y_j$, les $\alpha_j$ et les $\gamma_j$, ainsi lors de l'étape 220 du procédé 200, chaque fonction $f_{i,j}$ est évaluée en $Y_j$, mais aussi en $\alpha_j$ et $\gamma_j$.

Alors, pour chaque fonction F (les indices j sont omis pour plus de clarté), la sous-fonction de la première variable est une fonction constante égale à 1 telle que $f_X(X)=1$.

La sous-fonction de la deuxième variable est définie par :

$$f_Y(Y) = \alpha e^{-\gamma \|Y\|_2^2}.$$

Enfin, les sous-fonctions $f_i(x_i, Y)$ de deux variables évaluées en $x_i$ et en les paramètres de l'unité-serveur sont définies comme suit :

$$\forall (i,j) \in [1, K] \times [1, \ell], f_{(i-1)\ell+j}\left(x_{(i-1)\ell+j}, Y\right) = quant\left(e^{\gamma 2^j x_{(i-1)\ell+j} Y_i}\right)$$

$$\forall i \in [1, p], f_{K\ell+i}(x_{K\ell+i}, Y) = quant\left(e^{\gamma 2^{i-1} x_{K\ell+i}}\right)$$

La fonction *quant(x)* est une fonction de quantification entière de l'élément x. Il peut par exemple s'agir de l'arrondi entier le plus proche. Afin d'obtenir un résultat plus précis, on peut multiplier le terme quantifié par un facteur d'échelle a>1 ; plus a est grand, et plus la perte d'information au niveau de la fonction *quant* est faible.

On peut résumer les sous-fonctions $f_i$ de la manière suivante :

$$\forall (i,j) \in [1, K] \times [1, \ell], f_{(i-1)\ell+j}\left(x_{(i-1)\ell+j}, Y\right) = quant\left(ae^{\gamma 2^j x_{(i-1)\ell+j} Y_i}\right)$$

$$\forall i \in [1, p], f_{K\ell+i}(x_{K\ell+i}, Y) = quant\left(ae^{\gamma 2^{i-1} x_{K\ell+i}}\right)$$

Où a est supérieur (facteur d'échelle effectif) ou égal (pas de facteur d'échelle) à 1. Les sous-fonctions $f_{\kappa\ell+i}$ permettent de calculer le terme $\alpha e^{-\gamma \|X\prime\|_2^2}$.

Dans l'exemple où le noyau du classificateur est un noyau tangente hyperbolique, le classificateur H s'écrit :

$$H(X) = \sum_{j=1}^{N} h_j(X) = \sum_{j=1}^{N} F(X', Y_j) = \sum_{j=1}^{N} \tanh(\kappa_k \langle X|Y_k \rangle + C_k)$$

$$= \sum_{j=1}^{N} [\exp\left(2(\kappa_k < X|Y_k > +C_k)\right) - 1]/[\exp\left(2(\kappa_k < X|Y_k > +C_k)\right) + 1]$$

Et chaque fonction $F_j$ est le terme exponentiel du noyau $h_j$ du classificateur dépendant de la donnée X et des paramètres du classificateur, et s'écrit comme suit

$$F_j(X, Y_j) = \exp[2(\kappa_j \langle X|Y_j \rangle + C)].$$

Les paramètres détenus par l'unité-serveur sont les $Y_j$, $\kappa_j$ et $C_j$, pour tout j de 1 à N, et donc lors de l'étape 220 du procédé chaque fonction $f_{i,j}$ est évaluée en $Y_j$, $\kappa_j$ et $C_j$.

Alors, pour chaque fonction F (les indices j sont encore omis), la sous-fonction de la première variable est encore une fonction constante égale à 1, $f_X(X)=1$.

La sous-fonction de la deuxième variable est définie par $f_Y(Y) = e^{2C}$

Les sous-fonctions $f_i(X,Y)$ de deux variables évaluées en X' et en les paramètres de l'unité-serveur sont définies comme suit :

$$\forall (i,j) \in [1, K] \times [1, \ell], f_{(i-1)\ell+j}\left(x_{(i-1)\ell+j}, Y\right) = quant\left(a. e^{\kappa 2^j x_{(i-1)\ell+j} Y_i}\right)$$

Comme précédemment, on a *quant(x)* une fonction de classification entière de x et a un facteur d'échelle, avec a choisi supérieur ou égal à 1, et en particulier strictement supérieur à 1 pour obtenir une amélioration de la précision du résultat de la fonction de quantification.

Une fois la fonction $F_j$ calculée pour chaque j de 1 à N, le calcul de $h_j$ se déduit facilement d'après la formule donnée ci-avant.

Dans le contexte de classification, en référence à la figure 2b, le procédé 200 est itéré sur chacune des fonctions $F_j$, de préférence en mettant en oeuvre n transferts inconscients sur des entrées de Nm bits comme décrit ci-avant, de sorte que l'unité-client récupère pour chaque fonction noyau $h_j$, j de 1 à N, un résultat $T_j$ correspondant, et l'unité-serveur récupère pour un $R_j$ correspondant, les $T_j$ et $R_j$ étant tels que $T_j \times R_j = F_j(X) \bmod m$.

L'étape 260 de calcul du résultat n'est pas mise en oeuvre pour qu'aucune partie n'ait de résultat intermédiaire avant le résultat de la classification de la donnée X.

En revanche, le procédé de classification comprend ensuite une étape 300 d'utilisation des résultats, comprenant :

- une évaluation sécurisée du résultat du classificateur $H(X) = \sum_{j=1}^{N} h_j(X),$
- et la comparaison du résultat du classificateur H(X) par rapport à un seuil b. En d'autres termes, cette étape 300 comprend le calcul sécurisé, à partir des valeurs de $T_j$ et $R_j$, de $H(X)$, et sa comparaison de H(X) au seuil b.

Cette étape est mise en oeuvre à l'aide d'un circuit booléen à évaluer par calcul sécurisé multipartite entre l'unité client détenant les entrées $(T_1,...T_N)$ et l'unité serveur détenant les entrées $(R_1,...R_N, b)$, de sorte que l'unité-client obtienne uniquement le résultat de la comparaison de H(X) à b et l'unité serveur n'apprenne aucune information sur X ni sur les $T_j$.

Cette étape peut par exemple être mise en oeuvre en utilisant le protocole de Yao ou le protocole de Goldreich-Micali-Wigderson (GMW), qui sont connus de l'Homme du Métier et rappelés dans la publication de T. Schneider et al., « GMW vs. Yao ? Efficient Secure Two-Partu Computation with Low Depth Circuits », in Financial Cryptography and Data Security, Volume 7859 of the series Lecture Notes in Computer Science, pp 275292, 2013.

Le protocole de Yao a été initialement introduit dans la publication de A.C. Yao et al., « How to generate and exchange secrets », In Foundations of Computer Science (FOCS'86), pp. 162-167, IEEE 1986. Le protocole GMW a lui été introduit dans la publication de O. Goldreich et al., « How to play any mental game or a completeness theorem for protocols with honest majority", In Symposium on Theory of Computing (STOC'87), pp218-229, ACM (1987).

Dans le cas où le noyau $h_j$ du classificateur est un noyau gaussien, le circuit booléen à évaluer est tel que :

$$H(X) = \begin{cases} 1 \; si \; \sum_{j=1}^{N} \left( (R_j \times T_j) \bmod m \right) < b \\ 0 \; sinon \end{cases}$$

Dans le cas où le noyau est un noyau tangente hyperbolique, un premier circuit booléen à évaluer pour obtenir le résultat du classificateur H(X) est tel que:

$$H(X) = \begin{cases} 1 \; si \; \sum_{j=1}^{N} \frac{Z_j - 1}{Z_j + 1} < b \; avec \; Z_j = \left( R_j \times T_j \right) \bmod m \\ 0 \; sinon \end{cases}$$

Ce calcul est assez coûteux quand il est implémenté dans un circuit booléen, à cause de la division. Une variante de circuit booléen à évaluer sans division, et proposant un temps d'implémentation réduit, est tel que :

$$H(X) = \begin{cases} 1 \; si \; \sum_{j=1}^{N} \left[ (Z_j - 1) \left( \prod_{k \in [1,N] \backslash j} (Z_k + 1) \right) \right] < b. \prod_{j=1}^{N} (Z_j + 1) \\ 0 \; sinon \end{cases}$$

Le procédé proposé permet donc de classifier des données de manière sécurisée sans fuite d'information sur les résultats intermédiaires $T_j$, $R_j$ tout en conservant une bonne précision sur le résultat.

**Revendications**

1. Procédé d'exécution d'un calcul cryptographique mis en oeuvre par une première unité de traitement dite unité-client (10) possédant une première donnée (X') comprenant un nombre n de composantes indexées et une deuxième unité de traitement dite unité-serveur (20) possédant au moins une deuxième donnée (Y), les unités comprenant chacune des moyens de traitement (11, 21),
   le procédé comprenant l'évaluation sécurisée (200) d'une fonction (F) de deux variables s'écrivant comme un produit de :

   - une sous-fonction $f_X$ d'une première variable
   - une sous-fonction $f_Y$ d'une deuxième variable, et
   - un produit de n sous-fonctions indexées $f_i$ des deux variables,

   l'évaluation étant mise en oeuvre avec la première (X') et la deuxième donnée (Y) comme entrées de la fonction (F), le procédé étant **caractérisé en ce qu'**il comprend les étapes suivantes :

   - génération aléatoire (210), par l'unité-serveur (20), d'un ensemble de n données inversibles pour la multiplication indexées $r_i$ appartenant à l'ensemble $\mathbb{Z}_m$ avec m premier,
   - génération (220), par l'unité-serveur (20), pour chaque i de 1 à n, d'un ensemble dont chaque élément est formé par le produit d'une donnée indexée $r_i$ avec un résultat possible de la sous-fonction de deux variables $f_i$ évaluée en la première et la deuxième donnée,
   - mise en oeuvre d'un protocole de transfert inconscient (230) entre l'unité client (10) et l'unité serveur (20) pour que l'unité client récupère, pour chaque i de 1 à n, une donnée intermédiaire $t_i$ égale au résultat de la sous-fonction de deux variables $f_i$ évaluée en la première (X') et la deuxième données (Y), multipliée par la donnée indexée $r_i$ :

   $$t_i = r_i \times f_i(x_i, Y)$$

   - multiplication (250), par l'unité client (10), de toutes les données intermédiaires et de la sous-fonction de la première variable $f_X$ évaluée en la première donnée (X') pour obtenir un résultat T :

   $$T = f_X(X') \times \prod_{i=1}^{n} t_i$$

   - génération (240), par l'unité serveur (20), d'un résultat R égal au produit de tous les inverses des données indexées et de la sous-fonction de la deuxième variable $f_Y$ évaluée en la deuxième donnée:

   $$R = f_Y(Y) \times \prod_{i=1}^{n} r_i^{-1}$$

   - utilisation (300) des résultats T et R dans une application cryptographique.

2. Procédé selon la revendication 1, comprenant en outre une étape (260) au cours de laquelle l'unité-client communique le résultat T à l'unité serveur, et l'unité-serveur calcule le résultat de la fonction en multipliant le résultat T par le résultat R.

3. Procédé selon la revendication 1, comprenant en outre une étape (260) au cours de laquelle l'unité-serveur communique le résultat R à l'unité client, et l'unité-client calcule le résultat de la fonction en multipliant le résultat T par le résultat R.

4. Procédé selon l'une des revendications précédentes, dans lequel l'unité-serveur (20) possède un nombre N de données $Y_1, ... Y_N$, et la donnée détenue par l'unité-client (10) est exprimée en base q, où q est un nombre entier positif strictement supérieur à 1, les composantes de la données étant à valeurs entre 0 et q-1, et le procédé comprend l'évaluation (200) de la fonction (F) entre la donnée de l'unité client et respectivement chaque donnée de l'unité-serveur, et

- lors de l'étape a), l'unité serveur génère aléatoirement un nombre N.n de données inversibles indexées $r_{i,j}$,
- lors de l'étape b), l'unité-serveur génère :

o soit, pour chaque donnée $Y_j$ qu'elle possède, et pour chaque i de 1 à n, un q-uplet dont chaque élément est formé par le produit d'une donnée indexée $r_{i,j}$ avec un résultat possible de la sous-fonction de deux variables $f_i$ évaluée en la première et la deuxième donnée :

$$(r_{i,j} \times f_i(0, Y_j), \dots, r_{i,j} \times f_i(q-1, Y_j))$$

∘ soit, pour chaque i de 1 à n, un q-uplet dont chaque élément est la concaténation des résultats du produit d'une donnée indexée $r_{i,j}$ avec l'évaluation de la sous-fonction de deux variables $f_i$ en un élément parmi l'ensemble des entiers de 0 à q-1 et chacune des N données de l'unité serveur:

$$(r_{i,1} \times f_i(0, Y_1) || \dots || r_{i,N} \times f_i(0, Y_N), \dots, r_{i,1} \times f_i(q-1, Y_1) || \dots || r_{i,N} \times$$
$$f_i(q-1, Y_N))$$

- lors de l'étape c), l'unité client met en oeuvre respectivement :

∘ soit un nombre N.n de transferts inconscients de type 1 parmi q avec les entrées de l'unité serveur codées sur m bits,
∘ soit un nombre n de transferts inconscients de type 1 parmi q avec les entrées de l'unité serveur codées sur N.m bits.

5. Procédé selon l'une des revendications précédentes, dans lequel les données de l'unité client et de l'unité serveur sont des données représentatives d'objets physiques ou de grandeurs physiques obtenues à partir d'un capteur ou d'une interface.

6. Procédé selon l'une des revendications précédentes, dans lequel la fonction (F) est au moins une partie d'un noyau d'une machine à vecteur de support.

7. Produit programme d'ordinateur, comprenant des instructions de code pour l'exécution, par un processeur d'une unité de traitement dite unité-serveur (20), d'un procédé comprenant l'évaluation sécurisée (200) d'une fonction (F) de deux variables s'écrivant comme un produit de :

- une sous-fonction $f_X$ d'une première variable
- une sous-fonction $f_Y$ d'une deuxième variable, et
- un produit de n sous-fonctions indexées $f_i$ des deux variables,

l'évaluation étant mise en oeuvre avec au moins une première donnée (X') possédée par une unité-client (10) et une deuxième donnée (Y) possédée par l'unité-serveur (20) comme entrées de la fonction (F),
le produit programme étant **caractérisé en ce que** le procédé comprend les étapes suivantes :

- génération aléatoire (210) d'un ensemble de n données inversibles pour la multiplication indexées $r_i$ appartenant à l'ensemble $\mathbb{Z}_m$ avec m premier,
- génération (220), pour chaque i de 1 à n, d'un ensemble dont chaque élément est formé par le produit d'une donnée indexée $r_i$ avec un résultat possible de la sous-fonction de deux variables $f_i$ évaluée en la première et la deuxième donnée,
- participation à un protocole de transfert inconscient (230) avec l'unité client (10) pour que l'unité client récupère, pour chaque i de 1 à n, une donnée intermédiaire $t_i$ égale au résultat de la sous-fonction de deux variables $f_i$ évaluée en la première (X') et la deuxième données (Y), multipliée par la donnée indexée $r_i$ :

$$t_i = r_i \times f_i(x_i, Y)$$

en vue d'une multiplication (250), par l'unité client (10), de toutes les données intermédiaires et de la sous-fonction de la première variable $f_X$ évaluée en la première donnée (X') pour obtenir un résultat T :

$$T = f_X(X') \times \prod_{i=1}^{n} t_i$$

- génération (240) d'un résultat R égal au produit de tous les inverses des données indexées et de la sous-fonction de la deuxième variable $f_Y$ évaluée en la deuxième donnée:

$$R = f_Y(Y) \times \prod_{i=1}^{n} r_i^{-1}$$

- utilisation (300) des résultats T et R dans une application cryptographique.

8. Procédé de classification d'une donnée détenue par une unité-client par l'évaluation d'un classificateur H d'une machine à vecteur de support en ladite donnée mise en oeuvre conjointement entre l'unité client et une unité serveur détenant des paramètres du classificateur H, ,
   **caractérisé en ce qu'**il comprend :

   - l'évaluation (200) d'au moins une partie du noyau du classificateur en la donnée détenue par l'unité-client mise en oeuvre conformément au procédé selon l'une des revendications 1 à 6, et
   - l'évaluation (300) du classificateur en la donnée détenue par l'unité-client à partir de l'évaluation, par calcul sécurisé multipartite entre l'unité client et l'unité serveur.

9. Procédé de classification selon la revendication 8, comprenant une étape préliminaire de quantification (100) de la donnée (X) détenue par l'unité-client (10), et dans lequel l'étape d'évaluation (200) d'au moins une partie du noyau du classificateur est mise en oeuvre sur une quantification entière du noyau du classificateur.

10. Procédé de classification selon la revendication 9, dans lequel l'étape d'évaluation (200) du noyau du classificateur est mise en oeuvre sur une quantification entière du noyau du classificateur multiplié par un facteur d'échelle.

11. Procédé de classification selon l'une des revendications 8 à 10, dans lequel le noyau du classificateur est un noyau à base radiale gaussien h de la forme :

$$h(X, Y) = \alpha e^{-\gamma \|X-Y\|_2^2}$$

et la donnée (X) détenue par l'unité-client comprend K composantes flottantes $(X_1, \ldots X_K)$, et le procédé comprend les étapes de :

- génération (100), à partir de la donnée (X) détenue par l'unité-client, d'une donnée $(X'=(x_1, \ldots x_{n+p}))$ en base q, et dont :

  ∘ les n premières composantes correspondent à la quantification des K composantes de la donnée (X), et vérifient :

$$X_i \approx \sum_{j=1}^{\ell} q^{j-1} x_{(i-1)\ell+j}$$

où $n=K*\ell$, $X_i$ est une composante de la donnée (X) et $x_i$ est une composante de la donnée en base q (X'),
∘ les $n+1^{\text{ème}}$ à $n+p^{\text{ème}}$ composantes correspondant à la quantification de la norme quadratique de la donnée (X), $\|X\|_2^2$, telles que :

$$\|X\|_2^2 \approx \sum_{i=1}^{p} q^{i-1} x_{n+i}$$

- évaluation (200) du noyau de classificateur, par le calcul d'une fonction F s'écrivant comme le produit de :

∘ une sous-fonction $f_X$ de la donnée X' de l'unité client telle que $f_X(X)=1$

∘ une sous-fonction $f_Y$ d'une deuxième donnée Y détenue par l'unité serveur telle que $f_Y(Y) = \alpha e^{-\gamma \|Y\|_2^2}$

∘ un produit de n sous-fonctions $f_i$ indexées de deux variables, telles que :

$$\forall (i,j) \in [1,K] \times [1,\ell], f_{(i-1)\ell+j}\big(x_{(i-1)\ell+j}, Y\big) = quant \left( ae^{\gamma 2^j x_{(i-1)\ell+j} Y_i} \right)$$

$$\forall i \in [1,p], f_{K\ell+i}(x_{K\ell+i}, Y) = quant \left( ae^{\gamma 2^{i-1} x_{K\ell+i}} \right)$$

où *quant* est une fonction de quantification entière et a est un facteur d'échelle supérieur ou égal à 1.

12. Procédé de classification selon l'une des revendications 8 à 10, dans lequel le noyau du classificateur est un noyau tangente hyperbolique h de la forme :

$$h(X,Y) = \tanh(\kappa \langle X | Y \rangle + C)$$

et la donnée détenue par l'unité-client comprend K composantes flottantes $(X_1,...X_K)$, et le procédé comprend les étapes de :

- génération (100), à partir de la donnée (X) détenue par l'unité-client, d'une donnée (X') en base q, dont les composantes correspondent à la quantification des K composantes de la donnée (X), et vérifient :

$$X_i \approx \sum_{j=1}^{\ell} q^{j-1} x_{(i-1)\ell+j}$$

où $n=K*\ell$, $X_i$ est une composante de la donnée (X) et $x_i$ est une composante de la donnée en base q (X'),
- évaluation (200) d'une partie du noyau de classificateur de la forme $\exp(2(\kappa < X|Y > +C))$, par le calcul d'une fonction F s'écrivant comme le produit de :

∘ une sous-fonction $f_X$ de la donnée (X') en base q de l'unité client telle que $f_X(X')=1$
∘ une sous-fonction $f_Y$ d'une deuxième donnée (Y) détenue par l'unité serveur telle que $f_Y(Y) = e^{2C}$
∘ un produit de n sous-fonctions $f_i$ indexées de deux variables, telles que :

$$\forall (i,j) \in [1,K] \times [1,\ell], f_{(i-1)\ell+j}\big(x_{(i-1)\ell+j}, Y\big) = quant \left( a. e^{\kappa 2^j x_{(i-1)\ell+j} Y_i} \right)$$

où *quant* est une fonction de quantification entière et a est un facteur d'échelle supérieur ou égal à 1.

13. Système de traitement de données comprenant une première unité de traitement (10) et une deuxième unité de traitement (20), chaque unité de traitement comprenant un processeur (11, 21) et une interface de communication 13 ; 23),

le système étant **caractérisé en ce que** la première (10) et la deuxième unité de traitement (20) sont adaptées pour mettre en oeuvre le procédé d'exécution de calcul cryptographique selon l'une des revendications 1 à 6 ou le procédé de classification selon l'une des revendications 8 à 12.

**Patentansprüche**

1. Verfahren zur Durchführung einer kryptographischen Berechnung, die von einer ersten Verarbeitungseinheit, Client-Einheit (10) genannt, durchgeführt wird, die einen ersten Datenwert (X') besitzt, die eine Anzahl n indizierter Komponenten und eine zweite Verarbeitungseinheit, Server-Einheit (20) genannt, umfasst, die zumindest einen zweiten Datenwert (Y) besitzt, wobei die Einheiten jeweils Verarbeitungsmittel (11, 21) umfassen, wobei das Verfahren die sichere Bewertung (200) einer Funktion (F) von zwei Variablen umfasst, die geschrieben werden als Produkt von:

   - einer $f_X$-Unterfunktion einer ersten Variablen
   - einer $f_Y$-Unterfunktion einer zweiten Variablen, und
   - einem Produkt aus n mit $f_i$ indizierten Unterfunktionen der beiden Variablen,

   wobei die Auswertung mit dem ersten (X') und dem zweiten Datenwert (Y) als Eingänge der Funktion (F) eingesetzt wird,
   wobei das Verfahren **dadurch gekennzeichnet ist, dass** es die folgenden Schritte umfasst:

   - Zufallserzeugung (210) durch die Server-Einheit (20) eines Satzes von n invertierbaren Daten für die Multiplikation, die mit $r_i$ indiziert sind und zu dem Satz $\mathbb{Z}_m$ mit m als erstem gehören,
   - Erzeugung (220) durch die Server-Einheit (20) für jedes i von 1 bis n eines Satzes, dessen jedes Element durch das Produkt eines mit $r_i$ indizierten Datenwerts gebildet wird, mit einem möglichen Ergebnis der Unterfunktion von zwei $f_i$ Variablen, die im ersten und im zweiten Datenwert bewertet werden,
   - Einsatz eines unbewussten Übertragungsprotokolls (230) zwischen der Client-Einheit (10) und der Server-Einheit (20), damit die Client-Einheit für jedes i von 1 bis n einen Zwischendatenwert $t_i$ gewinnt, der gleich dem Ergebnis der Unterfunktion von zwei $f_i$ Variablen ist und im ersten (X') und im zweiten Datenwert (Y) ausgewertet wird, multipliziert mit den mit $r_i$ indizierten Daten:

   $$t_i = r_i \times f_i(x_i, Y)$$

   - Multiplikation (250) mit der Client-Einheit (10) aller Zwischendatenwerte und der Unterfunktion der ersten Variablen $f_X$, die im ersten Datenwert (X') bewertet wird, um ein Ergebnis T zu erhalten:

   $$T = f_X(X') \times \prod_{i=1}^{n} t_i$$

   - Erzeugung (240) durch die Server-Einheit (20) eines Ergebnisses R gleich dem Produkt aller inversen der indizierten Daten und der Unterfunktion der zweiten $f_y$ Variablen, die im zweiten Datenwert ausgewertet wird:

   $$R = f_Y(Y) \times \prod_{i=1}^{n} r_i^{-1}$$

   - Verwendung (300) der Ergebnisse T und R in einer kryptographischen Anwendung.

2. Verfahren nach Anspruch 1, das ferner einen Schritt (260) umfasst, in dem die Client-Einheit das Ergebnis T an die Server-Einheit übermittelt, und die Server-Einheit das Ergebnis der Funktion berechnet, indem sie das Ergebnis T mit dem Ergebnis R multipliziert.

**3.** Verfahren nach Anspruch 1, das ferner einen Schritt (260) umfasst, in dem die Server-Einheit das Ergebnis R an die Client-Einheit übermittelt, und die Client-Einheit das Ergebnis der Funktion berechnet, indem sie das Ergebnis T mit dem Ergebnis R multipliziert.

**4.** Verfahren nach einem der vorstehenden Ansprüche, wobei die Server-Einheit (20) eine Zahl N Daten $Y_1, ... Y_N$ besitzt und der von der Client-Einheit (10) gehaltene Datenwert als Basis q ausgedrückt wird, wobei q eine positive ganze Zahl streng größer als 1 ist, wobei die Komponenten des Datenwerts bei Werten zwischen 0 und q-1 liegen, und das Verfahren die Bewertung (200) der Funktion (F) zwischen dem Datenwert der Client-Einheit und jeweils jedes Datenwerts der Server-Einheit umfasst, und

- im Schritt a) die Server-Einheit nach dem Zufallsprinzip eine N.n Zahl von invertierbaren mit $r_{i,j}$ indizierten Daten erzeugt,
- im Schritt b) die Server-Einheit Folgendes erzeugt:

◦ entweder für jeden Datenwert $Y_j$, den sie besitzt, und für jedes i von 1 bis n ein q-Tupel, dessen jedes Element durch das Produkt eines mit $r_{i,j}$ indizierten Datenwerts gebildet wird, mit einem möglichen Ergebnis der Unterfunktion von zwei $f_i$ Variablen, die im ersten und im zweiten Datenwert bewertet werden,

$$(r_{i,j} \times f_i(0, Y_j), ..., r_{i,j} \times f_i(q-1, Y_j))$$

◦ oder, für jedes i von 1 bis n ein q-Tupel, dessen jedes Element die Verkettung der Ergebnisse des Produkts eines mit $r_{i,j}$ indizierten Datenwerts mit der Bewertung der Unterfunktion von zwei $f_i$ Variablen in einem Element im Satz der ganzen Zahlen von 0 bis q-1 und jeder der N Daten der Server-Einheit:

$$(r_{i,1} \times f_i(0, Y_1)||...||r_{i,N} \times f_i(0, Y_N), ..., r_{i,1} \times f_i(q-1, Y_1)||...||r_{i,N}$$
$$\times f_i(q-1, Y_N))$$

- im Schritt c) die Client-Einheit jeweils einsetzt:

◦ entweder eine N.n Anzahl unbewusster Übertragungen vom Typ 1 unter q mit den Eingängen der Server-Einheit, die auf m Bits codiert sind,
◦ oder eine n Anzahl unbewusster Übertragungen vom Typ 1 unter q mit den Eingängen der Server-Einheit, die auf N.m Bits codiert sind.

**5.** Verfahren nach einem der vorstehenden Ansprüche, wobei die Daten der Client-Einheit und der Server-Einheit repräsentative Daten von physischen Objekten oder physikalischen Größen sind, die von einem Sensor oder einer Schnittstelle erhalten werden.

**6.** Verfahren nach einem der vorstehenden Ansprüche, wobei die Funktion (F) zumindest ein Teil eines Kerns einer Trägervektormaschine ist.

**7.** Rechnerprogrammprodukt, das Code-Befehle zur Ausführung eines Verfahrens durch einen Prozessor einer Verarbeitungseinheit, Server-Einheit (20) genannt, umfasst, das die sichere Bewertung (200) einer Funktion (F) von zwei Variablen umfasst, die geschrieben werden als Produkt von:

- einer $f_X$-Unterfunktion einer ersten Variablen
- einer $f_Y$-Unterfunktion einer zweiten Variablen, und
- einem Produkt aus n mit $f_i$ indizierten Unterfunktionen der beiden Variablen,

wobei die Bewertung mit zumindest einem ersten Datenwert (X'), der einer Client-Einheit (10) gehört, und einem zweiten Datenwert (Y), der der Server-Einheit (20) gehört, als Eingänge der Funktion (F) eingesetzt wird,
wobei das Programmprodukt **dadurch gekennzeichnet ist, dass** das Verfahren die folgenden Schritte umfasst:

- Zufallserzeugung (210) eines Satzes von n invertierbaren Daten für die Multiplikation, die mit $r_i$ indiziert sind und zu dem Satz $\mathbb{Z}_m$ mit m als erstem gehören,

- Erzeugung (220) für jedes i von 1 bis n eines Satzes, dessen jedes Element durch das Produkt eines mit $r_i$ indizierten Datenwerts gebildet wird, mit einem möglichen Ergebnis der Unterfunktion von zwei $f_i$ Variablen, die im ersten und im zweiten Datenwert bewertet werden,
- Beteiligung an einem unbewussten Übertragungsprotokoll (230) mit der Client-Einheit (10), damit die Client-Einheit für jedes i von 1 bis n einen Zwischendatenwert $t_i$ gewinnt, der gleich dem Ergebnis der Unterfunktion von zwei $f_i$ Variablen ist und im ersten (X') und im zweiten Datenwert (Y) ausgewertet wird, multipliziert mit den mit $r_i$ indizierten Daten:

$$t_i = r_i \times f_i(x_i, Y)$$

für eine Multiplikation (250) durch die Client-Einheit (10) aller Zwischendatenwerte und der Unterfunktion der ersten Variablen $f_X$, die im ersten Datenwert (X') bewertet wird, um ein Ergebnis T zu erhalten:

$$T = f_X(X') \times \prod_{i=1}^{n} t_i$$

- Erzeugung (240) eines Ergebnisses R gleich dem Produkt aller inversen der indizierten Daten und der Unterfunktion der zweiten $f_y$ Variablen, die im zweiten Datenwert ausgewertet wird:

$$R = f_Y(Y) \times \prod_{i=1}^{n} r_i^{-1}$$

- Verwendung (300) der Ergebnisse T und R in einer kryptographischen Anwendung.

8. Verfahren zum Klassifizieren eines von einer Client-Einheit gehaltenen Datenwerts durch die Bewertung eines H-Klassifizierers einer Trägervektormaschine im Datenwert, der gemeinsam zwischen der Client-Einheit und einer Server-Einheit eingesetzt wird, die Parameter des H-Klassifizierers enthält,
**dadurch gekennzeichnet, dass** es Folgendes umfasst:

- die Bewertung (200) zumindest eines Teils des Kerns des Klassifizierers im von der Client-Einheit gehaltenen Datenwert, der nach dem Verfahren nach einem der Ansprüche 1 bis 6 eingesetzt wird, und
- die Bewertung (300) des Klassifizierers im von der Client-Einheit ab der Bewertung gehaltenen Datenwert ausgehend von der Bewertung durch gesicherte Mehrparteienberechnung zwischen der Client-Einheit und der Server-Einheit.

9. Verfahren zum Klassifizieren nach Anspruch 8, das einen vorhergehenden Schritt der Quantifizierung (100) des Datenwerts (X) umfasst, der von der Client-Einheit (10) gehalten wird, und wobei der Schritt zur Bewertung (200) zumindest eines Teils des Kerns des Klassifizierers über eine gesamte Quantifizierung des Kerns des Klassifizierers eingesetzt wird.

10. Verfahren zum Klassifizieren nach Anspruch 9, wobei der Schritt zur Bewertung (200) des Kerns des Klassifizierers über eine gesamte Quantifizierung des Kerns des Klassifizierers multipliziert mit einem Skalenfaktor eingesetzt wird.

11. Verfahren zum Klassifizieren nach einem der Ansprüche 8 bis 10, wobei der Kern des Klassifizierers ein Gaußscher Radialkern h folgender Form ist:

$$h(X, Y) = \alpha e^{-\gamma \|X - Y\|_2^2}$$

und der von der Client-Einheit gehaltene Datenwert (X) K Fließkomponenten ($X_1, ... X_K$) umfasst und das Verfahren folgende Schritte umfasst:

- Erzeugung (100) ausgehend vom von der Client-Einheit gehaltenen Datenwert (X) eines Datenwerts (X' =

$(x_1, \dots x_{n+p})$ in Basis q, und wovon:

◦ die n ersten Komponenten der Quantifizierung der K Komponenten des Datenwerts (X) entsprechen und Folgendes überprüfen:

$$X_i \approx \sum_{j=1}^{\ell} q^{j-1} x_{(i-1)\ell+j}$$

wobei n=K*ℓ, $X_i$ ist eine Komponente des Datenwerts (X), und $x_i$ ist eine Komponente des Datenwerts in Basis q (X'),

◦ die n+1. bis n+p. Komponenten der Quantifizierung der quadratischen Norm des Datenwerts (X) $\|X\|_2^2$ entsprechen, wie:

$$\|X\|_2^2 \approx \sum_{i=1}^{p} q^{i-1} x_{n+i}$$

- Bewertung (200) des Klassifiziererkerns durch die Berechnung einer Funktion F, die geschrieben wird als Produkt von:

◦ einer Unterfunktion $f_X$ des Datenwerts X' der Client-Einheit, wie $f_X(X)=1$
◦ einer Unterfunktion $f_Y$ eines zweiten Datenwerts Y, der von der Server-Einheit gehalten wird, wie

$$f_Y(Y) = \alpha e^{-\gamma \|Y\|_2^2}$$

◦ einem Produkt aus n mit $f_i$ indizierten Unterfunktionen von zwei Variablen, wie:

$$\forall (i,j) \in [1,K] \times [1,\ell], f_{(i-1)\ell+j}\big(x_{(i-1)\ell+j}, Y\big) = quant\left(ae^{\gamma 2^j x_{(i-1)\ell+j} Y_i}\right)$$

$$\forall i \in [1,p], f_{K\ell+i}(x_{K\ell+i}, Y) = quant\left(ae^{\gamma 2^{i-1} x_{K\ell+i}}\right)$$

wo *quant* eine gesamte Quantifizierungsfunktion ist und a ein Skalenfaktor höher als oder gleich 1 ist.

**12.** Verfahren zum Klassifizieren nach einem der Ansprüche 8 bis 10, wobei der Kern des Klassifizierers ein hyperbolischer Tangentenkern h folgender Form ist:

$$h(X, Y) = \tanh(\kappa \langle X|Y \rangle + C)$$

und der von der Client-Einheit gehaltene Datenwert K Fließkomponenten $(X_1, \dots X_K)$ umfasst und das Verfahren folgende Schritte umfasst:

- Erzeugung (100) aus dem von der Client-Einheit gehaltenen Datenwert (X) eines Datenwerts (X') in Basis q, dessen Komponenten der Quantifizierung der K Komponenten des Datenwerts (X) entsprechen und Folgendes überprüfen:

$$X_i \approx \sum_{j=1}^{\ell} q^{j-1} x_{(i-1)\ell+j}$$

wobei n=K*ℓ, $X_i$ ist eine Komponente des Datenwerts (X), und $x_i$ ist eine Komponente des Datenwerts in Basis q (X'),

- Bewertung (200) eines Teils des Klassifiziererkerns der Form exp(2(κ < $X|Y$ > +$C$)) durch die Berechnung einer Funktion F, die geschrieben wird als Produkt von:

  ◦ einer Unterfunktion $f_X$ des Datenwerts (X') in Basis q der Client-Einheit, wie fx(X')=1
  ◦ einer Unterfunktion $f_Y$ eines zweiten Datenwerts (Y), der von der Server-Einheit gehalten wird, wie $f_Y(Y)$ =$e^{2C}$
  ◦ einem Produkt aus n mit $f_i$ indizierten Unterfunktionen von zwei Variablen, wie:

$$\forall (i,j) \in [1, K] \times [1, \ell], f_{(i-1)\ell+j}\left(x_{(i-1)\ell+j}, Y\right) = quant\left(a.\, e^{\kappa 2^j x_{(i-1)\ell+j} Y_i}\right)$$

wo *quant* eine gesamte Quantifizierungsfunktion ist und a ein Skalenfaktor höher als oder gleich 1 ist.

13. Datenverarbeitungssystem, das eine erste Verarbeitungseinheit (10) und eine zweite Verarbeitungseinheit (20) umfasst, wobei jede Verarbeitungseinheit einen Prozessor (11, 21) und eine Kommunikationsschnittstelle (13; 23) umfasst,
   wobei das System **dadurch gekennzeichnet ist, dass** die erste (10) und die zweite Verarbeitungseinheit (20) geeignet sind, den Ausführungsprozess einer kryptographischen Berechnung nach einem der Ansprüche 1 bis 6 oder den Klassifizierungsprozess nach einem der Ansprüche 8 bis 12 durchzuführen.

**Claims**

1. A method for executing a cryptographic calculation applied by a first processing unit, called client unit (10) having a first datum (X') comprising a number n of indexed components and a second processing unit, called server unit (20), having at least one second datum (Y), the units each comprising processing means (11, 21),
   the method comprising the secured evaluation (200) of a function (F) of two variables being written as a product of:

   - a sub-function $f_X$ of a first variable
   - a sub-function $f_Y$ of a second variable, and
   - a product of n indexed sub-functions $f_i$ of two variables,

   the evaluation being applied with the first (X') and the second datum (Y) as inputs of the function (F),
   the method being **characterized in that** it comprises the following steps:

   - randomly generating (210), by the server unit (20), a set of n invertible data for the multiplication, indexed $r_i$ belonging to the set $\mathbb{Z}_m$ with m being a prime number,
   - generating (220), by the server unit (20), for each i from 1 to n, a set for which each element is formed by the product of an indexed datum $r_i$ with a possible result of the sub-function of two variables $f_i$ evaluated at the first and the second datum,
   - applying an oblivious transfer protocol (230) between the client unit (10) and the server unit (20) so that the client unit recovers, for each i from 1 to n, an intermediate datum $t_i$ equal to the result of the sub-function of two variables $f_i$ evaluated at the first (X') and the second data (Y), multiplied by the indexed datum $r_i$:

$$t_i = r_i \times f_i(x_i, Y)$$

   - multiplying (250), by the client unit (10), all the intermediate data and the sub-function of the first variable $f_X$ evaluated at the first datum (X') in order to obtain a result T:

$$T = f_X(X') \times \prod_{i=1}^{n} t_i$$

   - generating (240), by the server unit (20), a result R equal to the product of all the reciprocals of the indexed data and of the sub-function of the second variable $f_Y$ evaluated at the second datum:

$$R = f_Y(Y) \times \prod_{i=1}^{n} r_i^{-1}$$

- using (300) the results T and R in a cryptographic application.

2. The method according to claim 1, further comprising a step (260) during which the client unit communicates the result T to the server unit, and the server unit calculates the result of the function by multiplying the result T with the result R.

3. The method according to claim 1, further comprising a step (260) during which the server unit communicates the result R to the client unit, and the client unit calculates the result of the function by multiplying the result T with the result R.

4. The method according to one of the preceding claims, wherein the server unit (20) has a number N of data $Y_1,...Y_N$, and the datum held by the client unit (10) is expressed in base q, wherein q is a positive integer strictly greater than 1, the components of the data being with values between 0 and q-1, and the method comprises the evaluation (200) of the function (F) between the datum of the client unit and respectively each datum of the server unit, and

- during step a), the server unit randomly generates a number N.n of indexed invertible data $r_{i,j}$,
- during step b), the server unit generates:

  ◦ either, for each datum $Y_j$ which it has, and for each i from 1 to n, a q-tuple for which each element is formed by the product of an indexed datum $r_{i,j}$ with a possible result of the sub-function of two variables $f_i$ evaluated at the first and the second datum:

$$(r_{i,j} \times f_i(0, Y_j), ..., r_{i,j} \times f_i(q-1, Y_j))$$

  ◦ or, for each i from 1 to n, a q-tuple for which each element is the concatenation of the results of the product of an indexed datum $r_{i,j}$ with the evaluation of the sub-function of two variables $f_i$ in an element from among the set of integers from 0 to q-1 and each of the N data of the server unit:

$$(r_{i,1} \times f_i(0, Y_1)|| ... ||r_{i,N} \times f_i(0, Y_N), ..., r_{i,1} \times f_i(q-1, Y_1)|| ... ||r_{i,N} \times f_i(q-1, Y_N))$$

- during step c), the client unit respectively applies:

  ◦ either a number N.n of oblivious transfers of type 1 from among q with the inputs of the server unit coded on m bits,
  ◦ or a number n of oblivious transfers of type 1 from among q with the inputs of the server unit coded on N.m bits.

5. The method according to one of the preceding claims, wherein the data of the client unit and of the server unit are data representative of physical objects or of physical quantities obtained from a sensor or from an interface.

6. The method according to one of the preceding claims, wherein the function (F) is at least one portion of a kernel of a support vector machine.

7. A computer program product, comprising code instructions for executing, by a processor of a processing unit, called server unit (20), a method comprising the secured evaluation (200) of a function (F) of two variables written as a product of:

- a sub-function $f_X$ of a first variable
- a sub-function $f_Y$ of a second variable, and
- a product of n indexed sub-functions $f_i$ of two variables,

the evaluation being applied with at least one first datum (X') held by a client unit (10) and a second datum (Y) held by the server unit (20) as inputs for the function (F),
the program product being **characterized in that** the method comprises the following steps:

- randomly generating (210) a set of n invertible data for the multiplication, indexed $r_i$ belonging to the set $\mathbb{Z}_m$ with m being a prime number,
- generating (220), for each i from 1 to n, a set for which each element is formed by the product of an indexed datum $r_i$ with a possible result of the sub-function of two variables $f_i$ evaluated at the first and the second datum,
- participating in an oblivious transfer protocol (230) with the client unit (10) so that the client unit recovers, for each i from 1 to n, an intermediate datum $t_i$ equal to the result of the sub-function of two variables $f_i$ evaluated at the first (X') and the second datum (Y), multiplied by the indexed datum $r_i$:

$$t_i = r_i \times f_i(x_i, Y)$$

with view to multiplication (250), by the client unit (10), of all the intermediate data and of the sub-function of the first variable $f_X$ evaluated at the first datum (X') in order to obtain a result T:

$$T = f_X(X') \times \prod_{i=1}^{n} t_i$$

- generating (240) a result R equal to the product of all the reciprocals of the indexed data and of the sub-function of the second variable $f_Y$ evaluated at the second datum:

$$R = f_Y(Y) \times \prod_{i=1}^{n} r_i^{-1}$$

- using (300) the results T and R in a cryptographic application.

8. The method for classifying a datum held by a client unit by evaluating a classifier H of a support vector machine in said datum applied together between the client unit and a server unit having parameters of the classifier H, **characterized in that** it comprises:

- the evaluation (200) of at least one portion of the kernel of the classifier in the datum held by the client unit applied according to the method in accordance with one of claims 1 to 6, and
- the evaluation (300) of the classifier in the datum held by the client unit from the evaluation, by multiparty secured calculation between the client unit and the server unit.

9. The classification method according to claim 8, comprising a preliminary step (100) of quantifying the datum (X) held by the client unit (10), and wherein the step (200) of evaluating at least one portion of the kernel of the classifier is applied on an entire quantification of the kernel of the classifier.

10. The classification method according to claim 9, wherein the step (200) of evaluating the kernel of the classifier is applied on an entire quantification of the kernel of the classifier multiplied by a scale factor.

11. The classification method according to one of claims 8 to 10, wherein the kernel of the classifier is a kernel with a Gaussian radial basis h of the form:

$$h(X, Y) = \alpha e^{-\gamma \|X-Y\|_2^2}$$

and the datum (X) held by the client unit comprises K floating components $(X_1, ... X_K)$, and the method comprises the steps of:

- generating (100) from the datum (X) held by the client unit, a datum $(X'=(x_1,...x_{n+p}))$ in base q, and for which:

    ∘ the n first components correspond to the quantification of the K components of the datum (X), and verify:

$$X_i \approx \sum_{j=1}^{\ell} q^{j-1} x_{(i-1)\ell+j}$$

wherein $n=K*\ell$, $X_i$ is a component of the datum (X) and $x_i$ is a component of the datum in base q (X'),

    ∘ the $n+1^{th}$ to $n+p^{th}$ components corresponding to the quantification of the quadratic norm of the datum (X), $\|X\|_2^2$, such that:

$$\|X\|_2^2 \approx \sum_{i=1}^{p} q^{i-1} x_{n+i}$$

- evaluating (200) the classifier kernel, by calculating a function F written as the product of:

    ∘ a sub-function $f_X$ of the datum X' of the client unit such that $f_X(X)=1$

    ∘ a sub-function $f_Y$ of a second datum Y held by the server unit such that $f_Y(Y) = \alpha e^{-\gamma \|Y\|_2^2}$

    ∘ a product of n indexed sub-functions $f_i$ of two variables, such that:

$$\forall (i,j) \in [1,K] \times [1,\ell], f_{(i-1)\ell+j}\left(x_{(i-1)\ell+j}, Y\right) = quant\left(ae^{\gamma 2^j x_{(i-1)\ell+j} Y_i}\right)$$

$$\forall i \in [1,p], f_{K\ell+i}(x_{K\ell+i}, Y) = quant\left(ae^{\gamma 2^{i-1} x_{K\ell+i}}\right)$$

wherein *quant* is an entire quantification function and a is a scale factor greater than or equal to 1.

12. The classification method according to one of claims 8 to 10, wherein the kernel of the classifier is a hyperbolic tangent kernel h of the form:

$$h(X,Y) = \tanh(\kappa \langle X|Y \rangle + C)$$

and the datum held by the client unit comprises K floating components $(X_1,...X_K)$, and the method comprises the steps of:

- generating (100), from the datum (X) held by the client unit, a datum (X') in base q, the components of which correspond to the quantification of the K components of the datum (X), and verify:

$$X_i \approx \sum_{j=1}^{\ell} q^{j-1} x_{(i-1)\ell+j}$$

wherein $n=K*\ell$, $X_i$ is a component of the datum (X) and $x_i$ is a component of the datum in the base q (X'),

- evaluating (200) from a portion of the classifier kernel of the form $\exp(2(\kappa < X|Y > +C))$, by calculating a function F written as the product of:

    ∘ a sub-function $f_X$ of the datum (X') in base q of the client unit such that $fx(X')=1$

    ∘ a sub-function $f_Y$ of a second datum (Y) held by the server unit such that $f_Y(Y) = e^{2C}$

    ∘ a product of n indexed sub-functions $f_i$ of two variables, such that:

$$\forall (i,j) \in [1, K] \times [1, \ell], f_{(i-1)\ell+j}\left(x_{(i-1)\ell+j}, Y\right) = quant\left(a.\,e^{\kappa 2^{j} x_{(i-1)\ell+j} Y_{i}}\right)$$

wherein *quant* is an entire quantification function and a is a scale factor greater than or equal to 1.

13. A data processing system comprising a first processing unit (10) and a second processing unit (20), each processing unit comprising a processor (11, 21) and a communication interface (13; 23),
the system being **characterized in that** the first (10) and the second processing unit (20) are adapted for applying the method for executing a cryptographic calculation according to one of claims 1 to 6 or the classification method according to one of claims 8 to 12.

FIG. 1

**200** — Evaluation sécurisée de F

**210** — Génération données de masquage

**220** — Génération ensemble d'éléments

**230** — Transfert inconscient

**240** — Génération résultat R

**250** — Génération résultat T

**260** — Transmission R ou T

**300** — Application cryptographique

**FIG. 2a**

**FIG. 2b**

**10**

X=(x$_1$,...,x$_n$)

**20**

Y

**210**

$$\forall i \in [1, n], r_i \in {}_R\mathbb{Z}_m^*$$

**230**

x$_i$

$$t_i = (r_i \cdot f_i(x_i, Y))$$

$\forall i \in [1, n],$ OT

**220**

$$((r_i \cdot f_i(0, Y)), r_i \cdot f_i(1, Y))$$

**250**

$$T = f_X(X) \times \prod_{i=1}^{n} t_i$$

**240**

$$R = f_Y(Y) \times \prod_{i=1}^{n} r_i^{-1}$$

**FIG. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LIN et al.** On the design and analysis of the privacy-preserving SVM classifier. *IEEE Trans. Knowl. Data Eng.,* 2011, vol. 23 (11), 1704-1717
- **S. AVIDAN et al.** Privacy preserving pattern classification. *Proceedings of the International Conference on Image Processing, ICIP,* 12 Octobre 2008, 1684-1687
- **M. UPMANYU et al.** a secure crypto-biometric verification protocol. *IEEE Transactions on Information Forensics and Security,* 2010, vol. 5 (2), 255-268
- **Y. RAHULAMATHAVAN et al.** Privacy-preserving clinical decision support system using gaussian kernel-based classification. *IEEE J. Biomedical and Health Informatics,* 2014, vol. 18 (1), 56-66
- **M. NAOR ; B. PINKAS.** Computationally secure oblivious transfer. *J. Cryptology,* 2005, vol. 18 (1), 1-35
- Improved OT extension for transferring short secrets. **V. KOLESNIKOV ; R. KUMARESAN.** Advances in Cryptology - Crypto 2013 - 33rd Annual Cryptology Conférence. 18 Août 2013, 54-70
- **G. ASHAROV et al.** More efficient Oblivious Transfer and Extensions for Faster Secure Computation. *2013 ACM SIGSAC Conference on Computer and Communications Security, CCS'13,* 04 Novembre 2013, 535-548
- **T. SCHNEIDER et al.** GMW vs. Yao ? Efficient Secure Two-Partu Computation with Low Depth Circuits. *Financial Cryptography and Data Security, Volume 7859 of the series Lecture Notes in Computer Science,* 2013, 275292
- How to generate and exchange secrets. **A.C. YAO et al.** In Foundations of Computer Science (FOCS'86). IEEE, 1986, 162-167
- How to play any mental game or a completeness theorem for protocols with honest majority. **O. GOLDREICH et al.** In Symposium on Theory of Computing (STOC'87). ACM, 1987, 218-229